(19) 

Europäisches Patentamt

European Patent Office

Office européen des brevets

(11) **EP 4 465 608 A1**

(12) **EUROPEAN PATENT APPLICATION**

(43) Date of publication:
**20.11.2024 Bulletin 2024/47**

(21) Application number: **24176027.1**

(22) Date of filing: **15.05.2024**

(51) International Patent Classification (IPC):
**H04L 45/122** (2022.01)     **H04L 12/42** (2006.01)
**H04L 45/243** (2022.01)

(52) Cooperative Patent Classification (CPC):
**H04L 45/122; H04L 12/42; H04L 12/427;
H04L 45/243**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.05.2023 CN 202310554277**

(71) Applicant: **KunlunXin Technology (Beijing)
Company Limited
Beijing Hebei 100101 (CN)**

(72) Inventors:
• **ZHANG, Xiaoci**
  **Beijing, 100101 (CN)**
• **CHEN, Qingshu**
  **Beijing, 100101 (CN)**
• **WANG, Yong**
  **Beijing, 100101 (CN)**
• **OUYANG, Jian**
  **Beijing, 100101 (CN)**

(74) Representative: **Isarpatent
Patent- und Rechtsanwälte
Barth Hassa Peckmann & Partner mbB
Friedrichstraße 31
80801 München (DE)**

(54) **DATA TRANSMISSION METHOD, APPARATUS, AND MEDIUM**

(57)     The present disclosure provides a data transmission method and apparatus, an electronic device, and a medium, relates to the field of computer technology, and in particular, to the field of chip technology and data transmission technology. The implementation solution is: obtaining a plurality of data transmission requests, each data transmission request includes data to be transmitted, a data sending node, and a data receiving node; determining a target transmission length of each data transmission request, which indicates the minimum value of the number of nodes between the data sending node and the data receiving node of the data transmission request; dividing the plurality of data transmission requests into a plurality of sets based on the target transmission length of each data transmission request, wherein the target transmission lengths of at least one data transmission request included in each set are equal; and determining a sequence constituted by the plurality of sets to sequentially perform a data transmission operation for each set of the plurality of sets, and the data to be transmitted in at least one data transmission request included in each set is transmitted in parallel.

200

| obtaining a plurality of data transmission requests, and each of the plurality of data transmission requests includes data to be transmitted, a data sending node, and a data receiving node | S201 |

| for each of the plurality of data transmission requests, determining a target transmission length of the data transmission request, which indicates the minimum value of the number of nodes between the data sending node and the data receiving node of the data transmission request | S202 |

| dividing the plurality of data transmission requests into a plurality of sets based on the target transmission length of each of the plurality of data transmission requests, wherein the target transmission lengths of at least one data transmission request included in each of the plurality of sets are equal | S203 |

| determining a sequence constituted by the plurality of sets to sequentially perform a data transmission operation for each of the plurality of sets, and the data transmission operation comprises: transmitting the data to be transmitted in each data transmission request from the data sending node of the data transmission request to the data receiving node of the data transmission request, wherein the data to be transmitted in at least one data transmission request included in each set is transmitted in parallel | S204 |

**FIG. 2**

EP 4 465 608 A1

## Description

## TECHNICAL FIELD

The present disclosure relates to the field of computer technology, and in particular, to the field of chip technology and data transmission technology, and specifically to a data transmission method, an apparatus, a computer-readable storage medium, and a computer program product.

## BACKGROUND

Artificial intelligence is the discipline of studying how computers can simulate certain thinking processes and intelligent behaviors of a human being (such as learning, reasoning, thinking, planning, etc.), and there are both hardware-level and software-level technologies. The artificial intelligence hardware technologies generally include technologies such as sensors, special artificial intelligence chips, cloud computing, distributed storage, big data processing, etc. The artificial intelligence software technologies mainly include computer vision technology, speech recognition technology, natural language processing technology, machine learning/deep learning, big data processing technology, knowledge graph technology and other major technological directions.

With the development of artificial intelligence technology, more and more applications have achieved results far beyond traditional algorithms based on artificial intelligence technology. Deep learning is a data intensive algorithm and a computing intensive algorithm, and in order to improve the training speed and reasoning speed of a large-scale deep learning model, data processing can be performed by using a distributed system including a plurality of nodes, thereby meeting computing power requirements. The data exchange process in the distributed system will directly affect the efficiency of the distributed computing.

The methods described in this section are not necessarily methods that have been previously conceived or employed. Unless otherwise indicated, it should not be assumed that any method described in this section is considered to be the prior art only due to its inclusion in this section. Similarly, the problems mentioned in this section should not be assumed to be recognized in any prior art unless otherwise indicated.

## SUMMARY OF THE INVENTION

The present disclosure provides a data transmission method, an apparatus, a computer-readable storage medium, and a computer program product.

According to an aspect of the present disclosure, there is provided a data transmission method applied to a distributed system, the distributed system comprising a plurality of nodes, the plurality of nodes constituting a ring topology or a linear topology, the method comprising: obtaining a plurality of data transmission requests, and each of the plurality of data transmission requests includes data to be transmitted, a data sending node, and a data receiving node; for each of the plurality of data transmission requests, determining a target transmission length of the data transmission request, which indicates the minimum value of the number of nodes between the data sending node of the data transmission request and the data receiving node of the data transmission request; dividing the plurality of data transmission requests into a plurality of sets based on the target transmission length of each data transmission request of the plurality of data transmission requests, wherein the target transmission lengths of at least one data transmission request included in each set of the plurality of sets are equal; and determining a sequence constituted by the plurality of sets to sequentially perform a data transmission operation for each of the plurality of sets, and the data transmission operation includes: transmitting the data to be transmitted in each data transmission request from the data sending node of the data transmission request to the data receiving node of the data transmission request, wherein the data to be transmitted in at least one data transmission request included in each set is transmitted in parallel.

According to an aspect of the present disclosure, there is provided a data transmission apparatus applied to a distributed system, the distributed system comprising a plurality of nodes, the plurality of nodes constituting a ring topology or a linear topology, the apparatus comprising: an obtaining unit configured to obtain a plurality of data transmission requests, and each of the plurality of data transmission requests includes data to be transmitted, a data sending node, and a data receiving node; a determination unit configured to, for each of the plurality of data transmission requests, determine a target transmission length of the data transmission request, which indicates the minimum value of the number of nodes between the data sending node of the data transmission request and the data receiving node of the data transmission request; a dividing unit configured to divide the plurality of data transmission requests into a plurality of sets based on the target transmission length of each data transmission request of the plurality of data transmission requests, wherein the target transmission lengths of at least one data transmission request included in each set of the plurality of sets are equal; and a transmission unit configured to determine a sequence constituted by the plurality of sets to sequentially perform a data transmission operation for each of the plurality of sets, and the data transmission operation includes: transmitting the data to be transmitted in each data transmission request from the data sending node of the data transmission request to the data receiving node of the data transmission request, wherein the data to be transmitted in at least one data transmission request included in each set is transmitted in parallel.

According to another aspect of the present disclosure, there is provided a non-transitory computer-readable storage medium storing computer instructions, wherein the computer instructions are used to cause the computer to perform the method described above.

According to another aspect of the present disclosure, there is provided a computer program product, including a computer program, wherein the computer program, when executed by a processor, implements the method described above.

According to one or more embodiments of the present disclosure, data transmission efficiency can be improved.

It should be understood that the content described in this section is not intended to identify key or important features of the embodiments of the present disclosure, nor is it intended to limit the scope of the present disclosure. Other features of the present disclosure will become readily understood from the following description.

**BRIEF DESCRIPTION OF THE DRAWINGS**

The drawings exemplarily illustrate embodiments and constitute a part of the specification, and are used in conjunction with the textual description of the specification to explain the example implementations of the embodiments. The illustrated embodiments are for illustrative purposes only and do not limit the scope of the claims. Throughout the drawings, like reference numerals refer to similar but not necessarily identical elements.

FIG. 1 illustrates a schematic diagram of an example system in which various methods described herein may be implemented according to embodiments of the present disclosure.

FIG. 2 illustrates a flowchart of a data transmission method according to an example embodiment of the present disclosure.

FIGS. 3A - FIG. 3D illustrates schematic diagrams of a data transmission process according to an example embodiment of the present disclosure.

FIG. 4 illustrates a structural block diagram of a data transmission apparatus according to an example embodiment of the present disclosure.

FIG. 5 illustrates a structural block diagram of an example electronic device that can be used to implement embodiments of the present disclosure.

**DETAILED DESCRIPTION OF THE EMBODIMENTS**

The example embodiments of the present disclosure are described below in conjunction with the accompanying drawings, including various details of the embodiments of the present disclosure to facilitate understanding, and they should be considered as example only. Therefore, one of ordinary skill in the art will recognize that various changes and modifications may be made to the embodiments described herein without departing from the scope of the present disclosure. Similarly, descriptions of well-known functions and structures are omitted in the following description for the purpose of clarity and conciseness.

In the present disclosure, unless otherwise specified, the terms " first", " second " and the like are used to describe various elements and are not intended to limit the positional relationship, timing relationship, or importance relationship of these elements, and such terms are only used to distinguish one element from another. In some examples, the first element and the second element may refer to the same instance of the element, while in some cases they may also refer to different instances based on the description of the context.

The terminology used in the description of the various examples in this disclosure is for the purpose of describing particular examples only and is not intended to be limiting. Unless the context clearly indicates otherwise, if the number of elements is not specifically defined, the element may be one or more. In addition, the terms "and/or" used in the present disclosure encompass any one of the listed items and all possible combinations thereof.

In the related art, generally, a corresponding data communication algorithm is designed for a dedicated network such as Mesh or Nvlink, or data exchange in a distributed system is implemented based on a wormhole routing technology, and the hardware cost is relatively high.

Based on this, the present disclosure provides a data transmission method. In this data transmission method, data transmission requests are divided into a plurality of sets based on a target transmission length, and communication links corresponding to the data transmission requests in each set do not conflict, so that link conflicts can be avoided by sequentially performing data transmission for the plurality of sets, and data transmission efficiency can be improved by executing the data transmission requests in each set in parallel, so that the transmission links are utilized to the maximum extent, and the data transmission efficiency is optimized.

Embodiments of the present disclosure will be described in detail below with reference to the accompanying drawings.

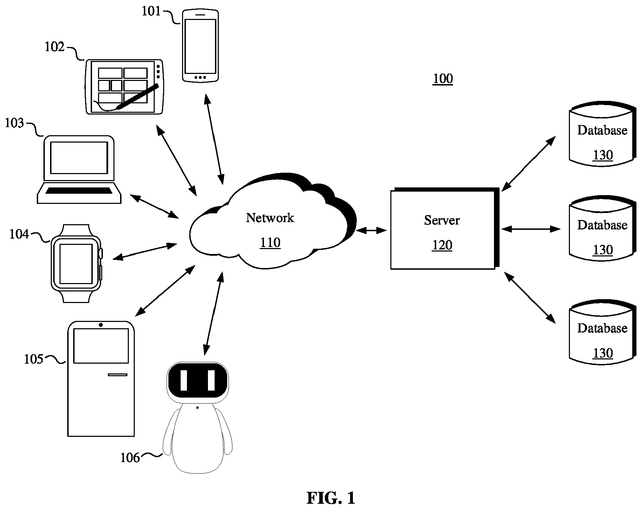

FIG. 1 illustrates a schematic diagram of an example system 100 in which various methods and apparatuses described herein may be implemented in accordance with embodiments of the present disclosure. Referring to FIG. 1, the system 100 comprises one or more client devices 101, 102, 103, 104, 105, and 106, a server 120, and one or more communication networks 110 that couple the one or more client devices to the server 120.

The client devices 101, 102, 103, 104, 105, and 106 may be configured to execute one or more applications.

In embodiments of the present disclosure, the server 120 may run one or more services or software applications that enable execution of the data transfer method.

In some embodiments, server 120 may also provide other services or software applications, which may include non-virtual environments and virtual environments. In some embodiments, these services may be provided as web-based services or cloud services, for example under a Software as a Service (SaaS) model, to users of the client devices 101, 102, 103, 104, 105, and/or 106.

In the configuration shown in FIG. 1, the server 120 may include one or more components that implement functions performed by the server 120. These components may include software components, hardware components, or a combination thereof that are executable by one or more processors. A user operating the client devices 101, 102, 103, 104, 105, and/or 106 may sequentially utilize one or more client applications to interact with the server 120 to utilize the services provided by these components. It should be understood that a variety of different system configurations are possible, which may be different from the system 100. Therefore, FIG. 1 is an example of a system for implementing the various methods described herein and is not intended to be limiting.

The user may use the client devices 101, 102, 103, 104, 105, and/or 106 to send data transfer requests. The client device may provide an interface that enables the user of the client device to interact with the client device. The client device may also output information to the user via the interface. Although FIG. 1 depicts only six client devices, those skilled in the art will be able to appreciate that the present disclosure may support any number of client devices.

The client devices 101, 102, 103, 104, 105, and/or 106 may include various categories of computer devices, such as portable handheld devices, general-purpose computers, such as personal computers and laptop computers, workstation computers, wearable devices, smart screen devices, self-service terminal devices, service robots, gaming systems, thin clients, various messaging devices, sensors, or other sensing devices, and the like. These computer devices may run various types and versions of software applications and operating systems, such as Microsoft Windows, Apple iOS, Unix-like operating systems, Linux or Linux-like operating systems (e.g., Google Chrome OS); or include various mobile operating systems, such as Microsoft Windows Mobile OS, iOS, Windows Phone, Android. The portable handheld devices may include cellular telephones, smart phones, tablet computers, personal digital assistants (PDAs), and the like. The wearable devices may include head-mounted displays, such as smart glasses, and other devices. The gaming systems may include various handheld gaming devices, Internet-enabled gaming devices, and the like. The client devices can perform various different applications, such as various applications related to the Internet, communication applications (e.g., e-mail applications), Short Message Service (SMS) applications, and may use various communication protocols.

The network 110 may be any type of network well known to those skilled in the art, which may support data communication using any of a variety of available protocols (including but not limited to TCP/IP, SNA, IPX, etc.). By way of example only, one or more networks 110 may be a local area network (LAN), an Ethernet-based network, a token ring, a wide area network (WAN), an Internet, a virtual network, a virtual private network (VPN), an intranet, an external network, a blockchain network, a public switched telephone network (PSTN), an infrared network, a wireless network (for example, Bluetooth, WiFi), and/or any combination of these and/or other networks.

The server 120 may include one or more general-purpose computers, a dedicated server computer (e.g., a PC (personal computer) server, a UNIX server, a mid-end server), a blade server, a mainframe computer, a server cluster, or any other suitable arrangement and/or combination. The server 120 may include one or more virtual machines running a virtual operating system, or other computing architectures involving virtualization (e.g., one or more flexible pools of a logical storage device that may be virtualized to maintain virtual storage devices of a server). In various embodiments, the server 120 may run one or more services or software applications that provide the functions described below.

The computing unit in the server 120 may run one or more operating systems including any of the operating systems described above and any commercially available server operating system. The server 120 may also run any of a variety of additional server applications and/or intermediate layer applications, including a HTTP server, an FTP server, a CGI server, a Java server, a database server, etc.

In some implementations, the server 120 may include one or more applications to analyze and merge data feeds and/or event updates received from users of the client devices 101, 102, 103, 104, 105, and 106. The server 120 may also include one or more applications to display the data feeds and/or the real-time events via one or more display devices of the client devices 101, 102, 103, 104, 105, and 106.

In some embodiments, the server 120 may be a server of a distributed system, or a server incorporating a blockchain. The server 120 may also be a cloud server, or an intelligent cloud computing server or an intelligent cloud host with an artificial intelligence technology. The cloud server is a host product in a cloud computing service system to overcome the defects of management difficulty and weak service expansibility in a traditional physical host and virtual private server (VPS) service.

The system 100 may also include one or more databases 130. In certain embodiments, these databases may be used to store data and other information. For example, one or more of the databases 130 may be used to store information such as audio files and video files. The database 130 may reside in various locations. For example, the database used by the server 120 may be local to the server 120, or may be remote from the server 120 and may communicate with the server 120 via a network-based or dedicated connection. The database 130 may be of different types. In some embodiments, the database used by the server 120 may, for example, be a relational database. One or more of these databases may store, update, and retrieve data to and from the database in response to a command.

In some embodiments, one or more of the databases 130 may also be used by an application to store application data. The database used by the application may be a different type of database, such as a key-value repository, an object repository, or a conventional repository supported by a file system.

The system 100 of FIG. 1 may be configured and operated in various ways to enable application of various methods and apparatuses described according to the present disclosure.

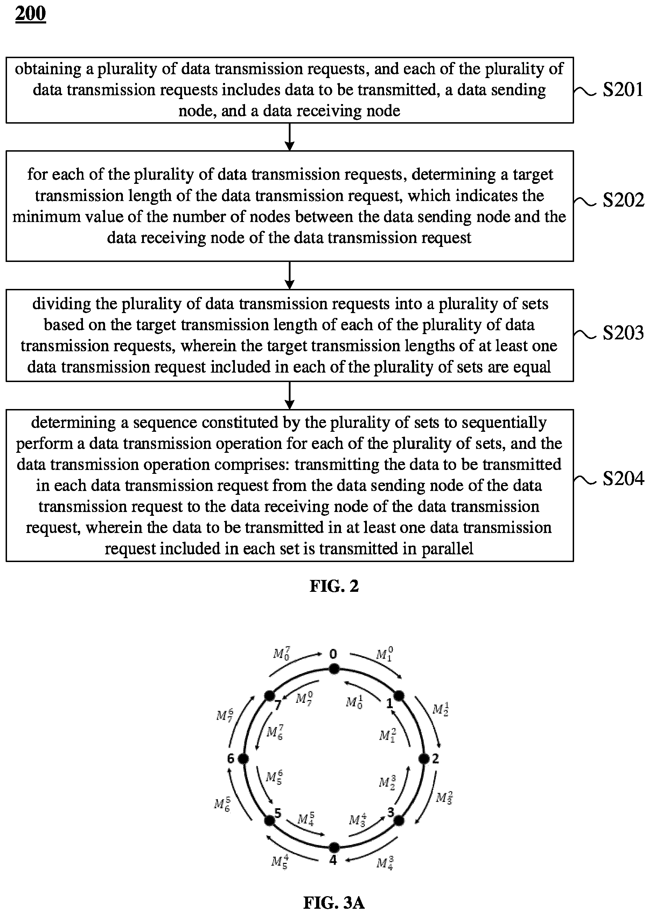

FIG. 2 illustrates a flowchart of a data transmission method 200 according to an example embodiment of the present disclosure, the method 200 is applied to a distributed system, the distributed system comprising a plurality of nodes, and the plurality of nodes constituting a ring topology or a linear topology. As shown in FIG. 2, the method 200 comprising:

> Step S201: obtaining a plurality of data transmission requests, and each of the plurality of data transmission requests includes data to be transmitted, a data sending node, and a data receiving node;

> Step S202: for each of the plurality of data transmission requests, determining a target transmission length of the data transmission request, which indicates a minimum value of a number of nodes between the data sending node and the data receiving node of the data transmission request;

> Step S203: dividing the plurality of data transmission requests into a plurality of sets based on the target transmission length of each of the plurality of data transmission requests, wherein the target transmission lengths of at least one data transmission request included in each of the plurality of sets are equal; and

> Step S204: determining a sequence constituted by the plurality of sets to sequentially perform a data transmission operation for each of the plurality of sets, and the data transmission operation includes: transmitting the data to be transmitted in each data transmission request from the data sending node of the data transmission request to the data receiving node of the data transmission request, wherein the data to be transmitted in at least one data transmission request included in each set is transmitted in parallel.

Generally, the data to be transmitted in a distributed system is transmitted sequentially along a specific path to the node corresponding to the next hop, starting from a data sending node and ending at a data receiving node. By applying the data transmission method described above, the plurality of data transmission requests in the ring topology or the linear topology can be divided into a plurality of sets based on the target transmission length. In this case, each set can include one or more data transmission requests, and when a set includes a plurality of data transmission requests, the data transmission length of the data transmission requests in that set are equal. The communication links occupied by the data transmission requests of each set in each hop do not conflict, and the link conflicts in data transmission operations in different sets can be efficiently avoided by sequentially performing the data transmission for the plurality of sets, the data transmission efficiency can be effectively improved by performing the data transmission requests in each set in parallel, so that the transmission links are utilized to the maximum extent, and the data transmission efficiency is optimized.

In some examples, the sequence constituted by the plurality of sets may be determined in a descending order or in an ascending order based on the target transmission length, but is not limited thereto, as long as the data transmission requests in different sets are not transmitted at the same time.

In some examples, when the plurality of nodes constitutes a linear topology, the shortest communication path between the data sending node and the data receiving node is uniquely determined, therefore the target transmission length of each data transmission request can be simply determined.

According to some embodiments, when the plurality of nodes constitute an ring topology, performing the data transmission operation for each of the plurality of sets comprises: in response to determining that the target transmission length of at least one data transmission request included in the set is half of the total length of the ring topology, determining, for each of the at least one data transmission request, the data transmission direction of the data transmission request, wherein the data transmission direction comprises a clockwise direction or a counterclockwise direction; and transmitting, along the determined data transmission direction, the data to be transmitted in the data transmission request from the data sending node of the data transmission request to the data receiving node of the data transmission request. In a distributed system with a ring topology, when the target transmission length of a data transmission request is half the length of the ring, the shortest transmission path between the data sending node and the data receiving node is not unique, that is, the shortest transmission paths in the clockwise and counterclockwise transmission directions are included, and by applying the method described above, the uniquely determined data transmission path can be obtained by limiting the transmission direction, link conflicts are avoided, and normal data transmission is guaranteed.

In some examples, by using a pre-configured rule, the data transmission is limited to be performed along a fixed direction (e.g., may be a clockwise direction, or may be a counterclockwise direction) when the target transmission length of the data transmission request is half of the total length of the ring topology.

According to some embodiments, determining the data transmission direction of the data transmission request comprises: in response to determining that the set comprises a plurality of data transmission requests, dividing the plurality of data transmission requests included in the set into a first subset and a second subset, wherein the data sending nodes in any two data transmission requests of the first subset and the second subset are not adjacent nodes; determining that the data transmission direction of at least one data transmission request included in the first subset is a clockwise direction or a counterclockwise direction; and determining that the data transmission direction of at least one data transmission request included in the second subset is a direction different from the data transmission direction of the first subset. Therefore, the plurality of nodes in the ring topology can be divided into two groups based on the staggered rule, the adjacent nodes transmit the data with a target transmission length of half of the total length of the ring topology in clockwise and counterclockwise, respectively, so as to allocate link resources more evenly.

In some examples, the plurality of nodes may be numbered sequentially with any node in the ring topology as a No. 1 node, and then the transmission direction of the data with a target transmission length of half of the total length of the ring topology may be determined based on the parity of the node number. For example, a clockwise transmission may be performed for the odd numbered node, and a counterclockwise transmission may be performed for the even numbered node.

According to some embodiments, when the plurality of nodes constitute a ring topology, determining, for each of the plurality of data transmission requests, the target transmission length of the data transmission request comprises: determining the number of nodes between the data sending node of the data transmission request and the data receiving node of the data transmission request in the ring topology in a clockwise direction, and recording the number of nodes as a first value; determining the number of nodes between the data sending node of the data transmission request and the data receiving node of the data transmission request in the ring topology in a counterclockwise direction, and recording the number of nodes as a second value; and determining the smaller value of the first value and the second value as the target transmission length. Therefore, the number of nodes between the data sending node and the data receiving node can be determined based on the clockwise and counterclockwise directions, respectively, so as to simply and efficiently determine the target transmission length of the data transmission request based on the minimum value.

According to some embodiments, the plurality of data transmission requests satisfy the following conditions: for any two nodes of the plurality of nodes, there exist a first data transmission request and a second data transmission request, wherein the data sending node of the first data transmission request is a first node of the two nodes, the data receiving node of the first data transmission request is a second node of the two nodes, and wherein the data sending node of the second data transmission request is the second node, and the data receiving node of the second data transmission request is the first node. Therefore, by using the method, exchanging data between any two nodes in a network is simply and efficiently implemented, that is, an efficient full-exchange algorithm is implemented, the data transmission efficiency is optimized in the case that the communication complexity is relatively high, and the performance of the distributed system is improved.

In some examples, the sending buffer and the receiving buffer of each node may be divided into several groups, the $j_{th}$ group of data in the sending buffer of the node i is transmitted to the node j, and the node j places the received data block from the node i at the $i_{th}$ position of the receiving buffer of itself. Therefore, full distribution of all the data in all the nodes is implemented, which can support deep learning distributed training tasks such as model parallel and fully meet the needs of actual application scenes.

In the above example, when the length of the data to be transmitted to the other plurality of nodes in each node is all m, the time overhead required by the above implementation is $T = t_s + m * t_w$, where $t_s$ is the start-up time of the communication, and $t_w$ is the time for transmitting a unit length message. By applying the full-exchange algorithm implemented by the method 200 on a bidirectional one-dimensional ring with a length of N, the first phase of the algorithm needs to perform a total of $N12 * (N/2 - 1)/2$ groups of communications, while the second phase of the algorithm needs to perform a total of $N/2$ groups of communications, therefore the total communication time complexity is $(N^2/8 + N/4) * (t_s + m * t_w)$ and the main term of the communication volume is $N^2/8 * m$, thereby the theoretical lower limit of the communication time complexity can be reached, the full exchange algorithm in the ring topology is effectively optimized, and the data exchange performance of the distributed system is improved.

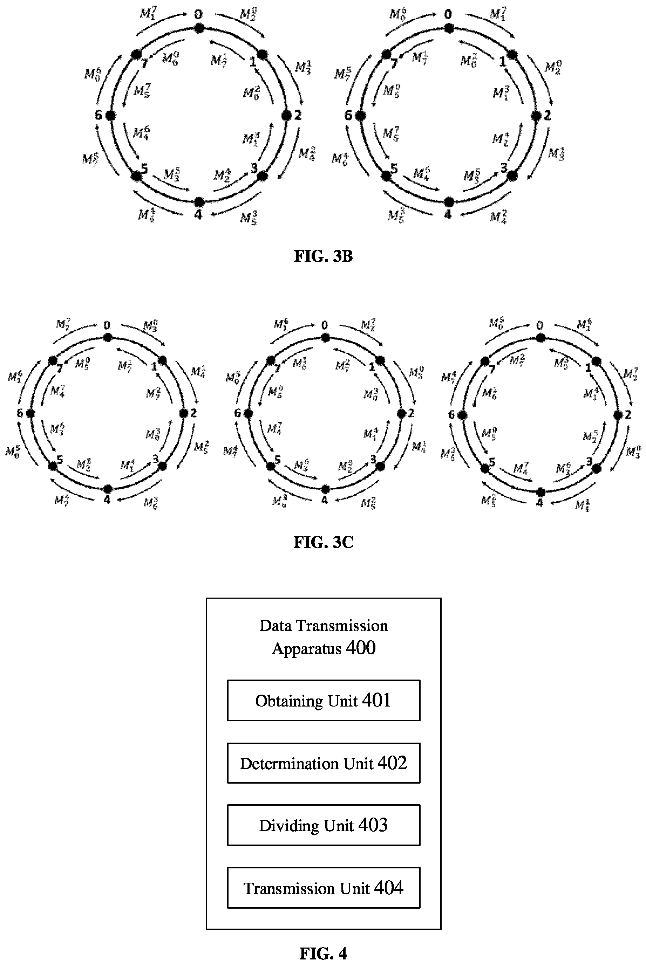

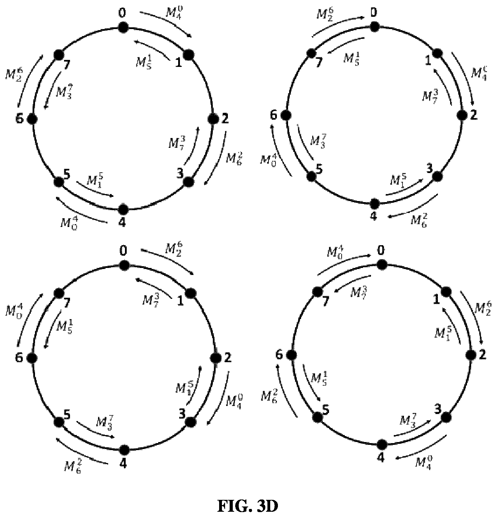

FIGS. 3A - FIG. 3D illustrates schematic diagrams of a data transmission process according to an example embodiment of the present disclosure. In this example, eight nodes in the distributed system constitute a ring topology, and there is a data transmission request between any two nodes in the system.

By applying the method 200, the plurality of data transmission requests may be divided into four sets, that is, the target transmission length is 1, 2, 3, and 4, respectively. Sequentially performing the data transmission requests in the four sets corresponds to the following process:

Step S10: all the nodes perform a 1-hop communication action in parallel, and process the messages with a target transmission length of 1, and node i transmits the message $M_{i+1}^{i}$ to node i+1 and transmits the message $M_{i-1}^{i}$ to node i-1;

Step S20: all the nodes perform the following 2-hops communication action in parallel, and process the messages with a target transmission length of 2 in parallel: Step S21, node i transmits the message $M_{i+2}^{i}$ to node i+1 and transmits the message $M_{i-2}^{i}$ to node i-1; Step S22, node i transmits the message $M_{i+1}^{i-1}$ to node i+1 and transmits the message $M_{i-1}^{i+1}$ to node i-1.

Step S30: all the nodes perform the following 3-hops communication action in parallel, and process the messages with a target transmission length of 3 in parallel: Step S31, node i transmits the message $M_{i+3}^{i}$ to node i+1 and transmits the message $M_{i-3}^{i}$ to node i-1; Step S32, node i transmits the message $M_{i+2}^{i-1}$ to node i+1 and transmits the message $M_{i-2}^{i+1}$ to node i-1; Step S33, node i transmits the message $M_{i+1}^{i-2}$ to node i+1 and transmits the message $M_{i-1}^{i+2}$ to node i-1.

Step S30: all the nodes perform the following 4-hops communication action in parallel according to the parity group of the subscript, and process the messages with a target transmission length of 4 in parallel: Step S41, node 2k transmits the message $M_{2k+4}^{2k}$ to node 2k + 1, and node 2k+1 transmits the message $M_{2k-3}^{2k+1}$ to node 2k; Step S42, node 2k transmits the message $M_{2k-3}^{2k+1}$ to node 2k-1, and node 2k-1 transmits the message $M_{2k+2}^{2k-2}$ to node 2k; Step S43, node 2k transmits the message $M_{2k+2}^{2k-2}$ to node 2k+1, and node 2k+1 transmits the message $M_{2k-1}^{2k+3}$ to node 2k; Step S44, node 2k transmits the message $M_{2k-1}^{2k+3}$ to node 2k-1, and node 2k-1 transmits the message $M_{2k}^{2k-4}$ to node 2k.

According to an aspect of the present disclosure, there is provided a data transmission apparatus applied to a distributed system, the distributed system comprises a plurality of nodes, and the plurality of nodes constitute a ring topology or a linear topology. FIG. 4 illustrates a structural block diagram of a data transmission apparatus 400 according to an example embodiment of the present disclosure. As shown in FIG. 4, the apparatus 400 comprises:

an obtaining unit 401 configured to obtain a plurality of data transmission requests, and each of the plurality of data transmission requests includes data to be transmitted, a data sending node, and a data receiving node;

a determination unit 402 configured to, for each of the plurality of data transmission requests, determine the target transmission length of the data transmission request, and the target transmission length indicates the minimum value of the number of nodes between the data sending node of the data transmission request and the data receiving node of the data transmission request;

a dividing unit 403 configured to divide the plurality of data transmission requests into a plurality of sets based on the target transmission length of each data transmission request of the plurality of data transmission requests, wherein the target transmission lengths of at least one data transmission request included in each of the plurality of sets are equal; and

a transmission unit 404 configured to determine a sequence constituted by the plurality of sets to sequentially perform a data transmission operation for each of the plurality of sets, and the data transmission operation includes: transmitting the data to be transmitted in each data transmission request from the data sending node of the data transmission request to the data receiving node of the data transmission request, wherein the data to be transmitted in at least one data transmission request included in each set is transmitted in parallel.

According to some embodiments, when the plurality of nodes constitute a ring topology, the transmission unit 404 comprises: a determination subunit configured to determine, for each of the at least one data transmission request, the data transmission direction of the data transmission request in response to determining that the target transmission length of the at least one data transmission request included in the set is half of the total length of the ring topology, wherein the data transmission direction comprises a clockwise direction or a counterclockwise direction; and a transmission subunit configured to transmit, along the data transmission direction, the data to be transmitted in the data transmission request from the data sending node of the data transmission request to the data receiving node of the data transmission request.

According to some embodiments, the determination subunit is configured to: in response to determining that the set comprises a plurality of data transmission requests, divide the at least one data transmission request included in the set into a first subset and a second subset, wherein the data sending nodes in any two data transmission requests of the first subset and the second subset are not adjacent nodes; determine that the data transmission direction of the at least one data transmission request included in the first subset is a clockwise direction; and determine that the data transmission direction of the at least one data transmission request included in the second subset is a counterclockwise direction.

According to some embodiments, when the plurality of nodes constitute a ring topology, the determination unit 402 is configured to: determine the number of nodes between the data sending node of the data transmission request and the data receiving node of the data transmission request in the ring topology in a clockwise direction, and record the number of nodes as a first value; determine the number of nodes between the data sending node of the data transmission request and the data receiving node of the data transmission request in the ring topology in a counterclockwise direction, and record the number of nodes as a second value; and determine the smaller value of the first value and the second value as the target transmission length.

According to some embodiments, the plurality of data transmission requests satisfy the following conditions: for any two nodes of the plurality of nodes, there exists a first data transmission request and a second data transmission request, wherein the data sending node of the first data transmission request is a first node of the two nodes, the data receiving node of the first data transmission request is a second node of the two nodes, and wherein the data sending node of the second data transmission request is the second node, and the data receiving node of the second data transmission request is the first node.

According to an aspect of the present disclosure, there is further provided a chip, comprising a data transmission apparatus as described above.

According to an aspect of the present disclosure, there is further provided an electronic device, comprising: at least one processor; and a memory communicatively connected to the at least one processor, wherein the memory stores instructions executable by the at least one processor, and the instructions are executed by the at least one processor, so that the at least one processor can perform the method described above.

According to an aspect of the present disclosure, there is further provided a non-transitory computer-readable storage medium storing computer instructions, wherein the computer instructions are used to cause the computer to perform the method described above.

According to an aspect of the present disclosure, there is further provided a computer program product, including a computer program, wherein the computer program, when executed by a processor, implements the method described above.

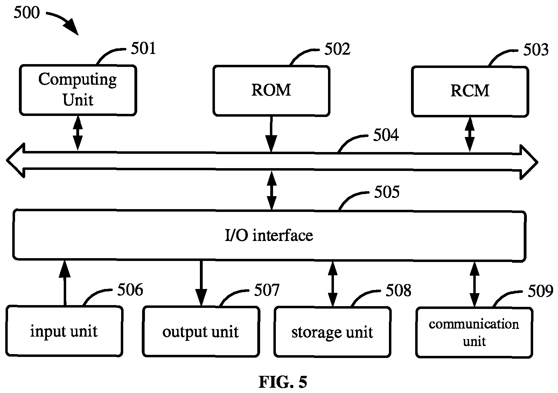

Referring to FIG. 5, a structural block diagram of an electronic device 500 that may be a server or client of the present disclosure is now described, which is an example of a hardware device that may be applied to aspects of the present disclosure. Electronic devices are intended to represent various forms of digital electronic computer devices, such as laptop computers, desktop computers, workstations, personal digital assistants, servers, blade servers, mainframe computers, and other suitable computers. The electronic devices may also represent various forms of mobile devices, such as personal digital processing, cellular telephones, smart phones, wearable devices, and other similar computing devices. The components shown herein, their connections and relationships, and their functions are merely as examples, and are not intended to limit the implementations of the disclosure described and/or claimed herein.

As shown in FIG. 5, the device 500 includes a computing unit 501, which may perform various appropriate actions and processing according to a computer program stored in a read-only memory (ROM) 502 or a computer program loaded into a random access memory (RAM) 503 from a storage unit 508. In the RAM 503, various programs and data required by the operation of the device 500 may also be stored. The computing unit 501, the ROM 502, and the RAM 503 are connected to each other through a bus 504. Input/output (I/O) interface 505 is also connected to the bus 504.

A plurality of components in the device 500 are connected to a I/O interface 505, including: an input unit 506, an output unit 507, a storage unit 508, and a communication unit 509. The input unit 506 may be any type of device capable of inputting information to the device 500, the input unit 506 may receive input digital or character information and generate a key signal input related to user setting and/or function control of the electronic device, and may include, but is not limited to, a mouse, a keyboard, a touch screen, a track pad, a trackball, a joystick, a microphone, and/or a remote control. The output unit 507 may be any type of device capable of presenting information, and may include, but are not limited to, a display, a speaker, a video/audio output terminal, a vibrator, and/or a printer. The storage unit 508 may include, but is not limited to, a magnetic disk and an optical disk. The communication unit 509 allows the device 500 to exchange information/data with other devices over a computer network, such as the Internet, and/or various telecommunication networks, and may include, but is not limited to, a modem, a network card, an infrared communication device, a wireless communication transceiver and/or a chipset, such as a Bluetooth device, a 802.11 device, a WiFi device, a WiMAX device, a cellular communication device, and/or the like.

The computing unit 501 may be a variety of general and/or special purpose processing components with processing and computing capabilities. Some examples of the computing unit 501 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, etc. The computing unit 501 performs the various methods and processes described above, such as data transmission method. For example, in some embodiments, the data transmission method may be implemented as a computer software program tangibly contained in a machine-readable medium, such as the storage unit 508. In some embodiments, part or all of the computer program may be loaded and/or installed onto the device 500 via the ROM 502 and/or the communication unit 509. When the computer program is loaded to the RAM 503 and executed by the computing unit 501, one or more steps of the data transmission method described above may be performed. Alternatively, in other embodiments, the computing unit 501 may be configured to perform the data transmission method by any other suitable means (e.g., with the aid of firmware).

Various embodiments of the systems and techniques described above herein may be implemented in a digital electronic circuit system, an integrated circuit system, a field programmable gate array (FPGA), an application specific integrated circuit (ASIC), a dedicated standard product (ASSP), a system on a chip system (SoC), a complex programmable logic device (CPLD), computer hardware, firmware, software, and/or combinations thereof. These various embodiments may include: implementation in one or more computer programs that may be executed and/or interpreted on a programmable system including at least one programmable processor, where the programmable processor may be a dedicated or universal programmable processor that may receive data and instructions from a storage system, at least one input device, and at least one output device, and transmit data and instructions to the storage system, the at least one input device, and the at least one output device.

The program code for implementing the method of the present disclosure may be written in any combination of one or more programming languages. These program code may be provided to a processor or controller of a general-purpose computer, a special purpose computer, or other programmable data processing device such that the program code, when executed by the processor or controller, causes the functions/operations specified in the flowchart and/or block diagram to be implemented. The program code may be executed entirely on the machine, partly on the machine, partly on the machine as a stand-alone software package and partly on the remote machine or entirely on the remote machine or server.

In the context of the present disclosure, a machine-readable medium may be a tangible medium, which may contain or store a program for use by or in connection with an instruction execution system, device, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or devices, or any suitable combination of the foregoing. More specific examples of a machine-readable storage media may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

To provide interaction with a user, the systems and techniques described herein may be implemented on a computer having: a display device (e.g., a CRT (cathode ray tube) or an LCD (liquid crystal display) monitor) for displaying information to a user; and a keyboard and pointing device (e.g., a mouse or trackball) by which a user may provide input to the computer. Other types of devices may also be used to provide interaction with a user; for example, the feedback provided to the user may be any form of perception feedback (e.g., visual feedback, auditory feedback, or tactile feedback); and the input from the user may be received in any form, including acoustic input, voice input, or haptic input.

The systems and techniques described herein may be implemented in a computing system including a back-end component(e.g., as a data server), or a computing system including a middleware component (e.g., an application server), or a computing system including a front-end component (e.g., a user computer with a graphical user interface or a web browser, the user may interact with implementations of the systems and techniques described herein through the graphical user interface or the web browser), or in a computing system including any combination of such back-end components, middleware components, or front-end components. The components of the system may be interconnected by digital data communication (e.g., a communications network) in any form or medium. Examples of communication networks include a local area network (LAN), a wide area network (WAN), the Internet, and a blockchain network.

The computer system may include a client and a server. Clients and servers are generally remote from each other and typically interact through a communication network. The relationship between clients and servers is generated by computer programs running on respective computers and having a client-server relationship to each other. The server may be a cloud server, or may be a server of a distributed system, or a server incorporating a blockchain.

It should be understood that the various forms of processes shown above may be used, and the steps may be reordered, added, or deleted. For example, the steps described in the present disclosure may be performed in parallel or sequentially or in a different order, as long as the results expected by the technical solutions disclosed in the present disclosure can be achieved, and no limitation is made herein.

Although embodiments or examples of the present disclosure have been described with reference to the accompanying drawings, it should be understood that the foregoing methods, systems, and devices are merely example embodiments or examples, and the scope of the present disclosure is not limited by these embodiments or examples. Various elements in the embodiments or examples may be omitted or may be replaced by equivalent elements thereof. Furthermore, the steps may be performed by a different order than described in this disclosure. Furthermore, various elements in the embodiments or examples may be combined in various ways. Importantly, with the evolution of the technology, many elements described herein may be replaced by equivalent elements appearing after the present disclosure.

**Claims**

1. A data transmission method applied to a distributed system, the distributed system comprising a plurality of nodes, the plurality of nodes constituting a ring topology or a linear topology, the method comprising:

   obtaining (S201) a plurality of data transmission requests, wherein each of the plurality of data transmission requests includes data to be transmitted, a data sending node, and a data receiving node;
   for each of the plurality of data transmission requests, determining (S202) a target transmission length of the data transmission request, which indicates a minimum value of a number of nodes between the data sending node and the data receiving node of the data transmission request;
   dividing (S203) the plurality of data transmission requests into a plurality of sets based on the target transmission length of each of the plurality of data transmission requests, wherein the target transmission lengths of at least one data transmission request included in each set of the plurality of sets are equal;
determining (S204) a sequence constituted by the plurality of sets to sequentially perform a data transmission operation for each of the plurality of sets, wherein the data transmission operation includes: transmitting the data to be transmitted in each data transmission request from the data sending node of the data transmission request to the data receiving node of the data transmission request, and wherein the data to be transmitted in the data transmission request included in each set is transmitted in parallel.

2. The method according to claim 1, wherein, when the plurality of nodes constitutes a ring topology, performing the data transmission operation for each of the plurality of sets comprises:
in response to determining that the target transmission length of the data transmission request included in the set is half of the total length of the ring topology, for each of the at least one data transmission request,

   determining a data transmission direction of the data transmission request, wherein the data transmission direction comprises a clockwise direction or a counterclockwise direction; and transmitting, along the determined data transmission direction, the data to be transmitted in the data transmission request from the data sending node of the data transmission request to the data receiving node of the data transmission request.

3. The method according to claim 2, wherein determining the data transmission direction of the data transmission request comprises:

   in response to determining that a set comprises a plurality of data transmission requests, dividing the plurality of data transmission requests included in the set into a first subset and a second subset, wherein the data sending nodes in any two data transmission requests of the same subset are not adjacent nodes;
   determining that the data transmission direction of data transmission request included in the first subset is a clockwise direction or a counterclockwise direction; and
   determining that the data transmission direction of data transmission request included in the second subset is a direction different from the data transmission direction of the first subset.

4. The method according to any one of claims 1-3, when the plurality of nodes constitutes a ring topology, determining, for each of the plurality of data transmission requests, the target transmission length of the data transmission request comprises:

determining the number of nodes between the data sending node of the data transmission request and the data receiving node of the data transmission request in the ring topology in a clockwise direction, and recording the number of nodes as a first value;

determining the number of nodes between the data sending node of the data transmission request and the data receiving node of the data transmission request in the ring topology in a counterclockwise direction, and recording the number of nodes as a second value; and

determining the smaller value of the first value and the second value as the target transmission length.

5. The method according to any one of claims 1-4, wherein the plurality of data transmission requests satisfies the following conditions:

for any two nodes of the plurality of nodes, there exists a first data transmission request and a second data transmission request, wherein the data sending node of the first data transmission request is a first node of the two nodes, the data receiving node of the first data transmission request is a second node of the two nodes, and wherein the data sending node of the second data transmission request is the second node, and the data receiving node of the second data transmission request is the first node.

6. A data transmission apparatus applied to a distributed system, the distributed system comprising a plurality of nodes, the plurality of nodes constituting a ring topology or a linear topology, the apparatus comprising:

an obtaining unit (401) configured to obtain a plurality of data transmission requests, and each of the plurality of data transmission requests includes data to be transmitted, a data sending node, and a data receiving node;

a determination unit (402) configured to, for each of the plurality of data transmission requests, determine a target transmission length of the data transmission request, which indicates a minimum value of a number of nodes between the data sending node and the data receiving node of the data transmission request;

a dividing unit (403) configured to divide the plurality of data transmission requests into a plurality of sets based on the target transmission length of each data transmission request of the plurality of data transmission requests, wherein the target transmission lengths of at least one data transmission request included in each set of the plurality of sets are equal; and

a transmission unit (404) configured to determine a sequence constituted by the plurality of sets to sequentially perform a data transmission operation for each of the plurality of sets, wherein the data transmission operation includes: transmitting the data to be transmitted in each data transmission request from the data sending node of the data transmission request to the data receiving node of the data transmission request, wherein the data to be transmitted in the data transmission in each set is transmitted in parallel.

7. The apparatus according to claim 6, wherein, when the plurality of nodes constitutes a ring topology, the transmission unit comprises:

a determination subunit configured to determine, for each of the at least one data transmission request, the data transmission direction of the data transmission request in response to determining that the target transmission length of the at least one data transmission request included in the set is half of the total length of the ring topology, wherein the data transmission direction comprises a clockwise direction or a counterclockwise direction; and

a transmission subunit configured to transmit, along the determined data transmission direction, the data to be transmitted in the data transmission request from the data sending node of the data transmission request to the data receiving node of the data transmission request.

8. The apparatus according to claim 7, the determination subunit is configured to:

in response to determining that the set comprises a plurality of data transmission requests, divide the plurality of data transmission requests included in the set into a first subset and a second subset, wherein the data sending nodes in any two data transmission requests of the same subset are not adjacent nodes;

determine that the data transmission direction of data transmission request included in the first subset is a clockwise direction or a counterclockwise direction; and

determine that the data transmission direction of data transmission request included in the second subset is a direction different from the data transmission direction of the first subset.

9. The apparatus according to any one of claims 6-8, wherein, when the plurality of nodes constitutes a ring topology, the determination unit is configured to:

determine the number of nodes between the data sending node of the data transmission request and the data receiving node of the data transmission request in the ring topology in a clockwise direction, and record the number of nodes as a first value;

determine the number of nodes between the data sending node of the data transmission request and the data receiving node of the data transmission request in the ring topology in a counterclockwise direction, and record the number of nodes as a second value; and

determine the smaller value of the first value and the second value as the target transmission length.

10. The apparatus according to any one of claims 6-9, wherein, the plurality of data transmission requests satisfies the following conditions:

for any two nodes of the plurality of nodes, there exists a first data transmission request and a second data transmission request, wherein the data sending node of the first data transmission request is a first node of the two nodes, the data receiving node of the first data transmission request is a second node of the two nodes, and wherein the data sending node of the second data transmission request is the second node, and the data receiving node of the second data transmission request is the first node.

11. A non-transient computer readable storage medium storing computer instructions, wherein the computer instructions are used to cause the computer to perform the method according to any one of claims 1-5.

12. A computer program product, comprising a computer program, wherein the computer program, when executed by a processor, implements the method claimed in any one of claims 1-5.

**FIG. 1**

**200**

| |
|---|
| obtaining a plurality of data transmission requests, and each of the plurality of data transmission requests includes data to be transmitted, a data sending node, and a data receiving node — S201 |

↓

| |
|---|
| for each of the plurality of data transmission requests, determining a target transmission length of the data transmission request, which indicates the minimum value of the number of nodes between the data sending node and the data receiving node of the data transmission request — S202 |

↓

| |
|---|
| dividing the plurality of data transmission requests into a plurality of sets based on the target transmission length of each of the plurality of data transmission requests, wherein the target transmission lengths of at least one data transmission request included in each of the plurality of sets are equal — S203 |

↓

| |
|---|
| determining a sequence constituted by the plurality of sets to sequentially perform a data transmission operation for each of the plurality of sets, and the data transmission operation comprises: transmitting the data to be transmitted in each data transmission request from the data sending node of the data transmission request to the data receiving node of the data transmission request, wherein the data to be transmitted in at least one data transmission request included in each set is transmitted in parallel — S204 |

**FIG. 2**

**FIG. 3A**

**FIG. 3B**

**FIG. 3C**

**FIG. 4**

500

501
Computing Unit

502
ROM

503
RCM

504

505
I/O interface

506
input unit

507
output unit

508
storage unit

509
communication unit

**FIG. 5**

**FIG. 3D**

Europäisches
Patentamt

European
Patent Office

Office européen
des brevets

## EUROPEAN SEARCH REPORT

Application Number

EP 24 17 6027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 681 214 A (WUXI CITY CLOUD COMPUTING CENTER CO LTD) 15 June 2016 (2016-06-15) | 1,5,6, 10-12 | INV. H04L45/122 H04L12/42 H04L45/243 |
| Y | * abstract * * paragraphs [0018] - [0026], [0030] - [0037], [0057] - [0068] * ----- | 2-4,7-9 | |
| Y | US 7 212 490 B1 (KAO JUNG-HONG [US] ET AL) 1 May 2007 (2007-05-01) * abstract; figures 1-5 * * column 2, line 41 - column 4, line 47 * * column 6, lines 24-33 * * column 9, line 35 - column 10, line 9 * ----- | 2-4,7-9 | |

TECHNICAL FIELDS
SEARCHED      (IPC)

H04L

The present search report has been drawn up for all claims

| Place of search | Date of completion of the search | Examiner |
|---|---|---|
| The Hague | 18 September 2024 | Cranley, Nikki |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 6027

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2024

| Patent document cited in search report | | Publication date | Patent family member(s) | Publication date |
|---|---|---|---|---|
| CN 105681214 | A | 15-06-2016 | NONE | |
| US 7212490 | B1 | 01-05-2007 | NONE | |

EPO FORM P0459

For more details about this annex : see Official Journal of the European Patent Office, No. 12/82